# EUROPEAN PATENT SPECIFICATION

(11) **EP 1 484 998 B1**
(45) Date of publication and mention of the grant of the patent: **29.06.2005**
(21) Application number: 03707945.6
(22) Date of filing: 17.03.2003
(51) Int. Cl.: A47J 27/00, A47J 36/34

(54) **CONSTRUCTIVE ARRANGEMENT FOR COOKING UTENSILS**
KONSTRUKTIVE EINRICHTUNG FÜR KOCHGERÄTE
AGENCEMENT CONSTRUCTIF DE CHAUFFAGE D'USTENSILES

(30) Priority: 18.03.2002 BR 0201042
(43) Date of publication of application: 15.12.2004
(73) Proprietor: Multibras S.A. Eletrodomésticos, CEP-04578-000 Sao Paulo, SP (BR)
(72) Inventor: MONGUILOD, Liliana, Maria, Pereira, 04143-010 S o Paulo- SP (BR); MELLO, Carlos, Roberto, Lemos, Homem de, 89204-400 Joinville -SC (BR); SANTOS, Sérgio, Corumba dos, 09443-060 Ribeirao Pires-SP (BR)
(74) Representative: Held, Stephan, Dr.rer.nat., Dipl.-Chem.
(86) International application number: PCT/BR2003/000039
(87) International publication number: WO 2003/077718

(56) References cited:
- US-A- 2 508 963
- US-A- 5 638 806

## Description

### Field of the Invention

The present invention refers to a constructive arrangement to be applied to cooking utensils, more particularly to pans and cooktops provided with gas burners.

### Background of the invention

Food cooking operations on gas stoves are generally carried out by means of utensils in the form of pans or other recipients presenting a generally cylindrical tubular body, with the lower end closed by a flat or substantially flat bottom wall, against which is directed the flame of a respective gas burner of the cooktop that is generally incorporated to the upper part of a stove.

The cooktops are usually defined by a metallic plate, which is stamped in order to define a kind of a shallow tray, from the bottom of which the usual gas burners are projected.

In these known constructive arrangements used in the household gas stoves, it is necessary to position the pans during a cooking operation with their bottom somewhat vertically spaced from the flame of a burner, so as to obtain an adequate operation of the stove.

In order to correctly position the pans over the burners, the cooktop is provided with grates generally made of cast iron or steel wire, which are placed around the burners, each grate serving an individual burner or a group of burners. These grates are placed on the cooktop so as to be detachable for cleaning and they are generally locked against horizontal slides by the action of surrounding steps provided by deformation of the plate that defines the cooktop.

The pans are placed on the grates to be submitted to the action of the burners in operation.

Due to the fact that the cooktop can receive different types and sizes of pans, the grates are constructed so as to define a seating support from a region that surrounds and is adjacent to the circular alignment of the flame produced by the burner, making the grates to have their radially internal region directly reached by the flame of the burners. The heating of the whole structure of the grates is inevitable during the operation of the gas burners, making the operations of removing the grates for cleaning the latter and the cooktop laborious, unpleasant and associated to constant accidents as a function of the overheated condition of said parts.

Besides the disadvantages related to the cleaning operations, the existence of the grates in the gas stoves is a factor that impairs the production of cooktops having a "clean" design, i.e., with no steps to retain the grates and which can be easily handled during the cooking and cleaning procedures. The existence of the grates is an obstacle to the design flexibility and to the ease of movements on a cooktop.

### Objects of the Invention

Due to the disadvantages of the known solutions mentioned above, the present invention has as a generic object to provide a constructive arrangement for cooking utensils, which allows the use of cooktops provided with gas burners but not presenting the usual grates for placing the pans on the burners.

It is still an object of the present invention to provide a constructive arrangement such as mentioned above, which allows using different types and sizes of pans in association with the gas burners of the cooktop.

### Summary of the Invention

In order to attain the objects mentioned above, the constructive arrangement for cooking utensils comprises a cooktop provided with gas burners and a set of pans and other recipients to be used on said cooktop, each of said recipients presenting a tubular body with a lower end closed by a bottom wall, against which is directed the annular flame of a gas burner.

According to the invention, each recipient carries, preferably in a single piece, at least three lower feet, circumferentially spaced from each other and which are preferably disposed according to the same circular alignment with a diameter which is at least slightly larger than that of the annular flame produced by the gas burners, said feet being dimensioned to be seated on the cooktop, maintaining the bottom wall of the recipient at a certain height above the gas burners.

The feet of a recipient are preferably arranged, so as to be contained inside a contour that is inscribed in the inner contour of another recipient of the same arrangement of utensils, making possible the telescopic stacking of at least two recipients.

The cooktop consists preferably of a horizontal flat plate presenting a plurality of median openings, through which respective gas burners are projected, with the flat plate region disposed around each gas burner defining the surface that supports the feet of the recipient positioned on the respective gas burner.

The constructive arrangement proposed herein allows to eliminate the grates and to form cooktops devoid of superficial discontinuities other than those defined by the gas burners.

### Brief Description of the Drawings

The invention will be described now, with reference to the enclosed drawings, in which:

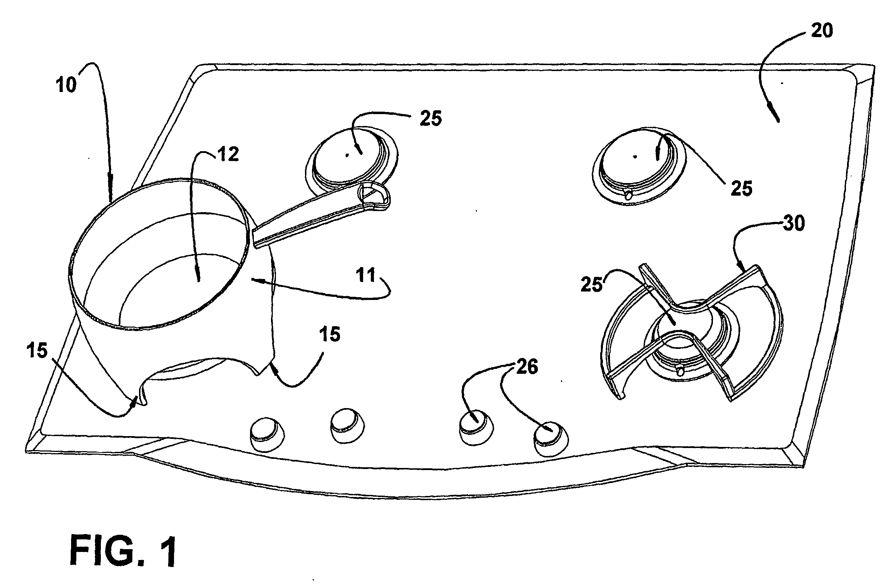

Figure 1 is a top perspective view of a cooktop provided with fours gas burners, one of said burners being covered by a recipient in the form of a pan presenting the constructive arrangement according to the present invention, and another burner being associated with an optional grate;

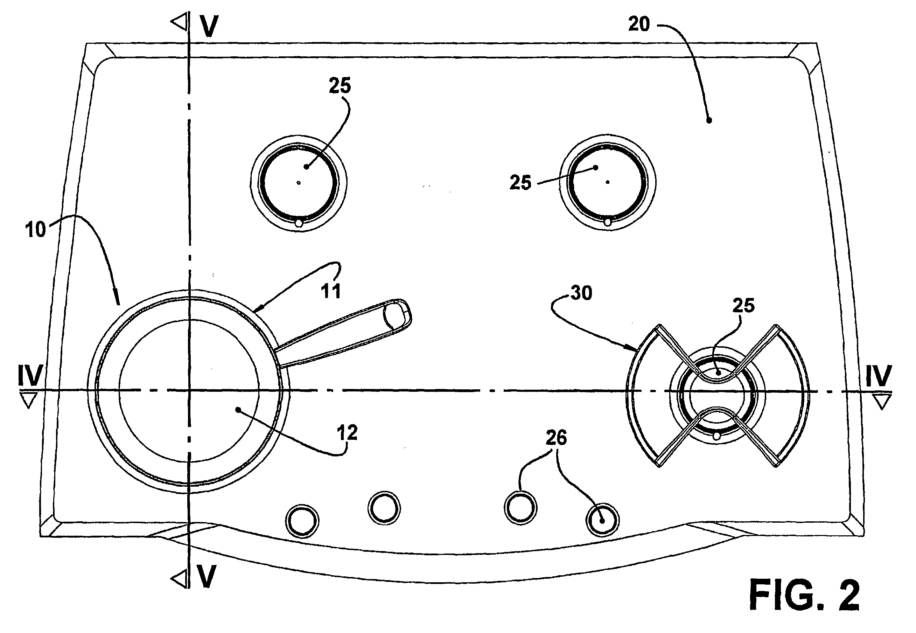

Figure 2 is a top plan view of the arrangement of figure 1;

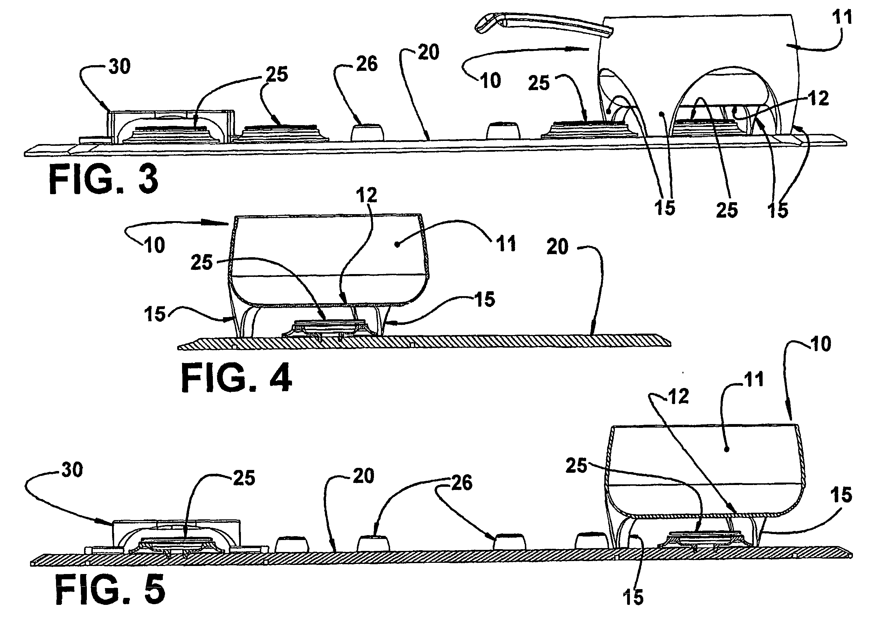

Figure 3 is rear elevational view of the arrangement of figures 1 and 2;

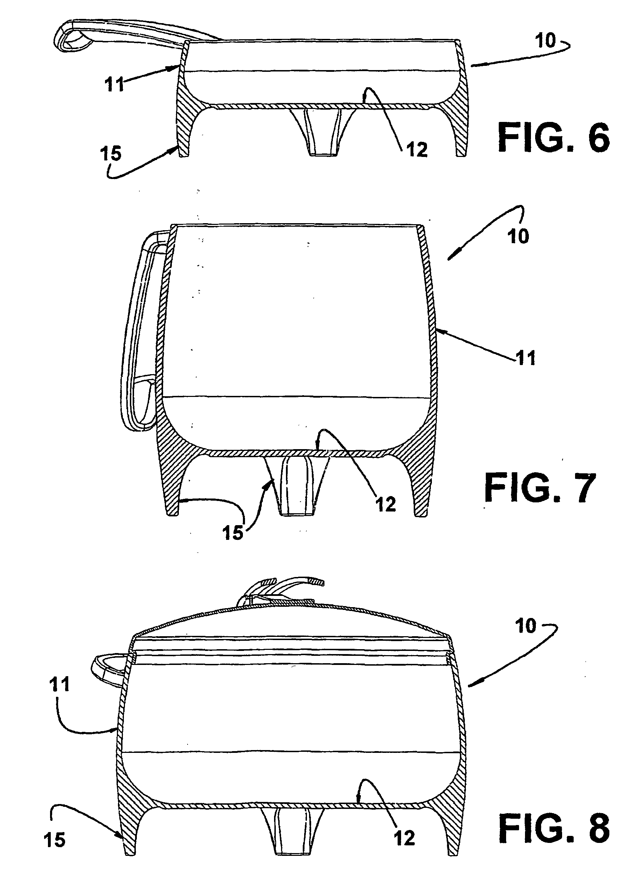

Figures 4 and 5 are cross sectional views of the present constructive arrangement taken along lines IV-IV and V-V of figure 2, respectively; and
Figures 6, 7 and 8 are cross sectional views of three constructive variations of a recipient in the form of a pan that can be used in the constructive arrangement of the present invention.

### Description of the Illustrated Embodiment

As illustrated in the figures of the enclosed drawings and as mentioned in the beginning of this specification, the present constructive arrangement comprises, according to a first aspect of the invention, a set of recipients 10 defined by pans, frying pans, kettles etc., presenting a tubular body 11 generally of a circular section with a lower end closed by a bottom wall 12. The recipients 10 may be constructed in any material that is suitable for cooking food when placed directly on the flame, such as for example stainless steel, aluminum alloys, other cast metals, and glass, and incorporating in a single piece at least three lower feet 15 circumferentially spaced from each other.

The feet 15 are preferably disposed according to the same circular alignment, generally concentric to the axis of the recipient 10 and presenting a diameter which is at least slightly larger than that of the circular flame produced by the gas burners 25 of a cooktop 20.

The feet are dimensioned to seat on the cooktop 20, maintaining the bottom of the recipient at a certain height above the gas burners 25.

In the recipient 10 illustrated in the drawings and defined by a pan, the feet 15 consist of axial extensions of the bottom wall 12, said extensions being circumferentially spaced from each other in order to allow the air to circulate below the bottom wall 12, when the recipient 10 is positioned on a gas burner 25 in operation. However, it should be understood that the feet 15 might present different embodiments since they allow maintaining the recipient 10 to be placed directly on the cooktop 20 at a certain height over a gas burner 25.

The feet 15 are preferably shaped to be contained inside a contour that is inscribed, with a small radial gap, in the inner contour of another recipient 10 of the same arrangement of utensils, in order to allow the recipients to be stored telescopically stacked at least in groups of two.

As a function of the fact that the recipients 10 are directly and adequately placed on the cooktop 20, the latter does not require the usual grates around the gas burners 25 for placing the recipients 10 provided with feet 15. Thus, the cooktop 20 can be formed by a horizontal plate presenting a plurality of median openings (not illustrated), through which are projected the respective gas burners 25. The flat plate region disposed around each gas burner 25 defines a seating surface for the feet 15 of the recipient 10 positioned onto a respective gas burner 25.

The cooktop 20 can be further optionally provided with control knobs 26 for controlling the gas valves, or it can be completely smooth, except in the assembly region of the gas burners 25 where it can be provided with a slight upper annular draw. In this last constructive option, the knobs 26 are mounted to a control panel outside the cooktop 20.

In order that the cooktop 20 can also operate with the conventional recipients not presenting the feet 15, it is foreseen a grate 30 to be removably seated on the cooktop 20 around a respective gas burner 25.

## Claims

1. A constructive arrangement for cooking utensils, comprising a cooktop (20) provided with gas burners (25) and a set of recipients (10) to be placed on said cooktop, each of said recipients presenting a tubular body (11) with a lower end closed by a bottom wall (12), against which is directed the annular flame of a gas burner (25), **characterized in that** each recipient (10) carries at least three lower feet (15) circumferentially spaced from each other and disposed according to a circular alignment with a diameter which is at least slightly larger than that of the annular flame produced by the gas burners (25), said feet (15) being dimensioned to be seated on the cooktop (20), maintaining the bottom wall (12) of the recipient (10) at a certain height above the gas burners (25).

2. The arrangement according to claim 1, **characterized in that** each recipient (10) incorporates the feet (15) in a single piece.

3. The arrangement according to claim 1, **characterized in that** the feet (15) are shaped in order to be contained inside a contour that is inscribed, with a small radial gap, in the inner contour of another recipient (10) of the same arrangement of utensils.

4. The arrangement according to claim 1, **characterized in that** the cooktop is formed by a horizontal flat plate presenting a plurality of median openings, through which are projected the respective gas burners (25), the flat plate region that is disposed around each gas burner (25) defining the seating surface for the feet (15) of the recipient (10) positioned on a respective gas burner (25).

5. The arrangement according to claim 4, **characterized in that** the cooktop (20) is provided with knobs (20) for the control of gas valves associated with the respective gas burners (25).

6. The arrangement according to claim 1, **characterized in that** it comprises a grate (30) to be removably seated on a cooktop (20), around a respective gas burner (25), so as to place the bottom wall of a recipient devoid of the feet (15).

## Patentansprüche

1. Konstruktive Anordnung für Kochgeräten, mit einer Kochoberseite (20), die mit Gasbrennern (25) versehen ist, und einer Gruppe von Aufnahmebehältern (10), die auf der Kochoberseite angeordnet werden, wobei jeder der Aufnahmebehälter einen röhrenförmigen Körper (11) aufweist, der ein durch eine Bodenwand (12) verschlossenes unteres Ende besitzt, gegen das die ringförmige Flamme eines Gasbrenners (25) gerichtet ist, , **dadurch gekennzeichnet, dass** jeder Aufnahmebehälter (10) wenigstens drei untere Füße (15) umfasst, die in Umfangsrichtung voneinander beabstandet sind und in einer kreisförmigen Ausrichtung mit einem Durchmesser, der wenigstens geringfügig größer als jener der der durch die Gasbrenner (25) erzeugten ringförmigen Flamme ist, angeordnet sind, wobei die Füße (15) so bemessen sind, dass sie auf die Kochoberseite (20) gesetzt werden können und die Bodenwand (12) des Aufnahmebehälters (10) auf einer bestimmten Höhe über den Gasbrennern (25) halten.

2. Anordnung nach Anspruch 1, **dadurch gekennzeichnet, dass** jeder Aufnahmebehälter (10) mit den Füßen (15) einteilig ausgebildet ist.

3. Anordnung nach Anspruch 1, **dadurch gekennzeichnet, dass** die Füße (15) so geformt sind, dass sie innerhalb eines Umrisses enthalten sind, der mit einem kleinen radialen Spalt in den inneren Umriss eines weiteren Aufnahmebehälters (10) derselben Anordnung von Geräten einbeschrieben ist.

4. Anordnung nach Anspruch 1, **dadurch gekennzeichnet, dass** die Kochoberseite durch eine horizontale ebene Platte gebildet ist, die mehrere Mittelöffnungen aufweist, durch die die jeweiligen Gasbrenner (25) vorstehen, wobei der ebene Plattenbereich, der um jeden Gasbrenner (25) angeordnet ist, die Sitzfläche für die Füße (15) des auf einem entsprechenden Gasbrenner (25) positionierten Aufnahmebehälters (10) definiert.

5. Anordnung nach Anspruch 4, **dadurch gekennzeichnet, dass** die Kochoberseite (20) mit Knöpfen (20) versehen ist, um die Gasventile, die den jeweiligen Gasbrennern (25) zugeordnet sind, zu steuern.

6. Anordnung nach Anspruch 1, **dadurch gekennzeichnet, dass** sie einen Rost (30) umfasst, der auf einer Kochoberseite (20) um einen jeweiligen Gasbrenner (25) abnehmbar sitzt, um so die Bodenwand eines Aufnahmebehälters ohne Füße (15) darauf anzuordnen.

## Revendications

1. Agencement modulaire pour des ustensiles de cuisson, comprenant une plaque de cuisson (20) pourvue de brûleurs à gaz (25) et un ensemble de récipients (10) à placer sur ladite plaque de cuisson, chacun desdits récipients présentant un corps tubulaire (11) pourvu d'une extrémité inférieure fermée par une paroi (12) de fond, contre laquelle est orientée la flamme annulaire d'un brûleur à gaz (25), **caractérisé en ce que** chaque récipient (10) est équipé d'au moins trois pieds (15) espacés circonférentiellement les uns des autres et disposés selon un alignement circulaire ayant un diamètre qui est au moins légèrement plus grand que celui de la flamme annulaire produite par les brûleurs à gaz (25), lesdits pieds (15) étant dimensionnés pour reposer sur la plaque de cuisson (20), en maintenant la paroi (12) de fond du récipient (10) à une certaine hauteur au-dessus des brûleurs à gaz (25).

2. Agencement selon la revendication 1, **caractérisé en ce que** chaque récipient (10) incorpore les pieds (15) en une seule pièce.

3. Agencement selon la revendication 1, **caractérisé en ce que** les pieds (15) sont formés pour être contenus à l'intérieur d'un contour qui s'inscrit, avec un petit espace radial, dans le contour intérieur d'un autre récipient (10) du même agencement d'ustensiles.

4. Agencement selon la revendication 1, **caractérisé en ce que** la plaque de cuisson est formée par une plaque horizontale plate présentant une pluralité d'ouvertures médianes à travers lesquelles font saillie les brûleurs à gaz respectifs (25), la région plate de plaque qui est disposée autour de chaque brûleur à gaz (25) définissant la surface d'appui des pieds (15) du récipient (10) placé sur un brûleur à gaz respectif (25).

5. Agencement selon la revendication 4, **caractérisé en ce que** la plaque de cuisson (20) est pourvue de boutons (26) servant à la commande de robinets de gaz associés aux brûleurs à gaz respectifs (25).

6. Agencement selon la revendication 1, **caractérisé en ce qu'**il comprend une grille (30) à poser de manière amovible sur une plaque de cuisson (20), autour d'un brûleur à gaz respectif (25), de façon à placer la paroi de fond d'un récipient sans les pieds (15).
